Europäisches Patentamt

European Patent Office

Office européen des brevets

(19)

(11) Publication number: **0 009 834**
**B1**

# EUROPEAN PATENT SPECIFICATION

(12)

(45) Date of publication of patent specification: **13.07.83**

(51) Int. Cl.³: **F 16 C 33/66**

(21) Application number: **79200515.9**

(22) Date of filing: **21.09.79**

(54) Bearing for high rotational speeds.

(30) Priority: **02.10.78 NL 7809912**

(43) Date of publication of application:
**16.04.80 Bulletin 80/8**

(45) Publication of the grant of the patent:
**13.07.83 Bulletin 83/28**

(84) Designated Contracting States:
**CH DE FR GB IT NL SE**

(56) References cited:
**DE - C - 475 397**
**GB - A - 541 468**
**GB - A - 667 346**
**GB - A - 719 053**
**US - A - 1 705 281**
**US - A - 3 206 261**

(73) Proprietor: **SKF Industrial Trading & Development Company B.V.**
**Kelvinbaan 16 P.O. Box 50**
**NL-3430 AB Nieuwegein (NL)**

(72) Inventor: **Heemskerk, Rutgerus Simon**
**Olmenstraat 2**
**Vianen (NL)**

(74) Representative: **Merkelbach, B.**
**SKF Engineering & Research Centre B.V. P.O. Box 50 Plettenburgerweg 6A**
**NL-3430 AB Nieuwegein (NL)**

Courier Press, Leamington Spa, England

# Bearing for high rotational speeds

The invention relates to a bearing to be subjected to high rotational speeds, comprising a stationary race ring and a rotatable race ring between which rolling elements are located in a cage, and a lubricating system to supply lubricant to the races of the bearing, the lubricating system comprising at least one ring made of porous material, fixed to the stationary race ring, and connected to a source of lubricant adjacent to the stationary race ring.

In known high speed running bearing assemblies the lubricating means is provided with a pump to secure a desired pressure of the lubricant. This necessitates a comparatively complicated circulating, filtering and pressure regulating system, whereby the construction of the bearing is rendered additionally costly and difficult.

The object of the invention is to provide a bearing of the kind mentioned in the preamble, in which the stated disadvantages are avoided and which, moreover, is simple in design and effective in operation.

According to the invention, the bearing is characterized in that the or each porous ring has a portion which is directed axially inwardly of the bearing adjacent to the race of the rotatable race ring, said portion comprising a free end which has no contact with other parts of the bearing such that the lubricant, due to the effect of negative pressure generated by rotation of the rotatable race ring in use of the bearing, is drawn from said portion and is then directed, mainly in a radial direction of the bearing, to the stationary race ring and then returned to the or each porous ring via the stationary race for re-circulation.

The negative pressure at the rotating race is induced by the centrifugal force generated in rotation, whereby the lubricant is drawn out of the porous ring to the races to be lubricated; a lubricant pump with regulating systems is thus superfluous. Because the stationary race returns the lubricant to the porous ring, a circulation of lubricant is set up through the porous ring and the bearing, whereby the lubricant is continually circulated to the parts to be lubricated, and the service life of the bearing is therefore considerably prolonged. A contributory effect to this is that dirt particles are retained in the porous ring and thus removed from the lubricant, so that the bearing is actually lubricated at all time by lubricant of optimum quality.

It is noted that Netherlands Patent Application 7304414 discloses a bearing for low speeds, provided with a lubricating means in which no pump is used. Here use is made of a grease compound from which the lubricant is released in rotation by centrifugal force. The rotational speed, however, is comparatively low, in this case about 660 revolutions per minute, inasmuch as the grease compound is unable to flow. The invention, by contrast, relates to a bearing for very high rotational speeds, for example over 15,000 revolutions per minute, so that the prior art lubricating system suitable for low rotational speeds cannot be employed.

It is further noted that British Patent 541.468 discloses a bearing arrangement according to which oil is supplied by means of wicking. The wicking material however makes contact with a bearing part i.e. the cage of the rolling elements and therefore being dependable on the working of the cage.

An especially simple design is achieved when the source of lubricant comprises an absorbent ring or similar member saturated with lubricant and arranged in a recess formed in the or each porous ring and adjoining the stationary race ring.

According to an advantageous embodiment of the invention, a sealing ring is arranged on the side adjacent the race rings of the or each porous ring thus achieving a favourable circulation of the lubricant.

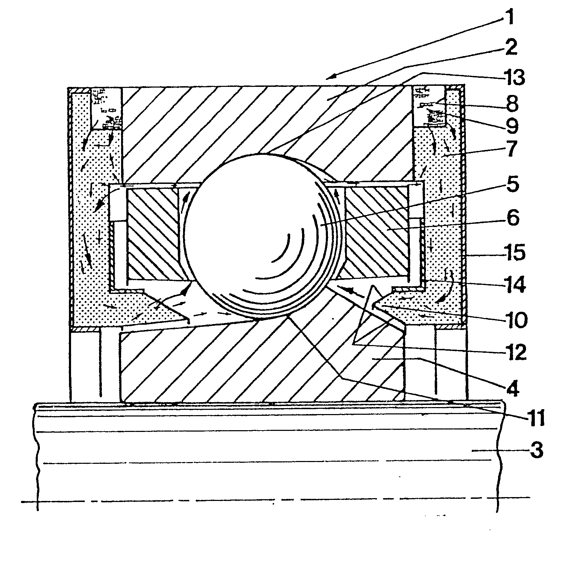

The invention will now be explained with references to the drawing, schematically showing an embodiment by way of example.

The bearing 1 is provided with a stationary outer race 2 and an inner race 4 fixed on a shaft 3 rotating at high speed. Between the outer race 2 and the inner race 4, a plurality of rolling elements 5 are retained in a cage 6. Only one rolling element 5 is shown in the drawing, in this case in the form of a ball. Of course, other kinds of rolling elements, such as symmetrical or asymmetrical rollers, cylinders or tapered rollers, may be used instead.

To the outer race 2, on opposed sides thereof, a pair of preferably flat rings 7 are fixed, made of a porous, for example sintered, material. In each porous ring 7, a recess 8 is formed, adjoining the outer race 2, in which recess a ring 9 of lubricant-absorbing material, preferably felt, is arranged. Each ring 9 is saturated with a lubricant and serves as source of lubricant. Each porous ring 7, in the region of the inner race 4, has a portion 10 directed axially inwardly of the bearing, and tapering to a point in the vicinity of the running surface 11 of the inner race 4.

The centrifugal forces arising during highspeed rotation of the bearing cause a negative pressure at the inner race 4, drawing out the lubricant from the rings 7 so that the lubricant emerges from the V-shaped boundary surfaces 12 of the portion 10. The lubricant is then directed between cage 6 and ball 5 to surface 13 of the outer race 2, i.e. in a radial direction of the bearing, and then returned to the porous rings 7, so that the lubricant is circulated as indicated by the arrows. The continual circulation of the lubricant during use of the bearing considerably prolongs the service life of the bearing 1. Furthermore, any dirt particles are removed from the lubricant during its passage through the porous rings 7, ensuring good quality of the lubricant for a long time.

On the inside of each porous ring 7, a sealing ring 14 is arranged, leaving clear only a small portion of the inside surface of the porous ring 7, thereby achieving an effective circulation of lubricant. On the outside surface of each porous ring 7 likewise, a sealing ring or plate 15 is arranged, partially enclosing the ring 7. Alternatively, each porous ring 7 may be provided with a protective sealing layer on the outside. Owing to the strong suction generated at high rotational speeds, such a protective layer, or the sealing ring 15, may be dispensed with if desired. It will be apparent, however, that to avoid lubricant loss, if the bearing is provided with only one porous ring 7 instead of two, there must at least be a seal on the other side of the bearing to keep the lubricant from leaking away in the course of time.

The invention is by no means limited to the embodiment described above by way of example, which may be modified in various ways within the scope of the invention as defined in the appended claims.

## Claims

1. A bearing to be subjected to high rotational speeds, comprising a stationary race ring (2) and a rotatable race ring (4) between which rolling elements (5) are located in a cage (6), and a lubricating system to supply lubricant to the races (11, 13) of the bearing (1), the lubricating system comprising at least one ring (7) made of porous material, fixed to the stationary race ring (2), and connected to a source of lubricant adjacent to the stationary race ring, the bearing being characterized in that the or each porous ring (7) has a portion (10) which is directed axially inwardly of the bearing adjacent to the race of the rotatable race ring (4) said portion comprising a free end which has no contact with other parts of the bearing.

2. A bearing according to claim 1, characterized in two porous rings (7) are fixed on opposed sides of the stationary race ring (2) and the axially inwardly directed portions (10) of such rings (7) have no contact with a bearing part.

3. A bearing according to claim 1 or 2, characterized in that the source of lubricant comprises an absorbent ring (9) saturated with lubricant and arranged in a recess (8) formed in the or each porous ring (7) and adjoining the stationary race ring (2).

4. A bearing according to claim 1 or 2, characterized in that the or each inwardly directed portion (10) tapers convergingly.

5. A bearing according to any of the preceding claims, characterized in that, on the side adjacent the race ring of the or each porous ring (7), a sealing ring (14) is arranged.

6. A bearing according to any of the preceding claims, characterized in that a sealing layer, at least for the lubricant, is arranged on the side adjacent the race ring of the or each porous ring (7).

7. A bearing according to any of the preceding claims, characterized in that, on the side remote from the race ring of the or each porous ring (7) a sealing ring (15) is arranged, partially enclosing the porous ring (7).

8. A bearing according to any of claims 1 to 5, characterized in that the or each porous ring is provided on the side remote from the race ring with a protective layer sealing it against lubricant loss.

9. A bearing according to any of the preceding claims, characterized in that the or each porous ring (7) is made of sintered material.

10. A bearing according to claim 3, characterized in that the absorbent ring (9) comprises felt.

## Revendications

1. Un palier destiné à être soumis à des vitesses de rotation élevées, comprenant une bague de roulement fixe (2) et une bague de roulement (4) pouvant tourner, entre lesquelles des éléments roulants (5) sont disposés dans une cage (6), et un système de lubrification pour l'amenée d'un lubrifiant jusqu'au chemin de roulement (11, 13) du palier (1), le système de lubrification comprenant au moins une bague (7) formée d'une matière poreuse, fixée à la bague de roulement fixe (2), et raccordée à une source de lubrifiant adjacente à la bague de roulement fixe, le palier étant caractérisé en ce que la ou chaque bague poreuse (7) comporte une partie (10) qui est dirigée axialement vers l'intérieur du palier au voisinage du chemin de roulement de la bague de roulement (4) pouvant tourner, ladite partie comprenant une extrémité libre qui n'a aucun contact avec les autres parties du roulement.

2. Un palier suivant la revendication 1, caractérisé en ce que deux bagues poreuses (7) sont fixées sur les côtés opposés de la bague de roulement fixe (2) et que les parties (10) dirigées axialement vers l'intérieur de ces bagues (7) n'ont aucun contact avec une partie du palier.

3. Un palier suivant les revendications 1 ou 2, caractérisé en ce que la source de lubrifiant comprend une bague absorbante (9) saturée par un lubrifiant et disposée dans un évidement (8) formé dans la ou chaque bague poreuse (7) et adjacente à la bague de roulement fixe (2).

4. Un palier suivant les revendications 1 ou 2, caractérisé en ce que la ou chaque partie (10) dirigée vers l'intérieur diminue de section vers son extrémité de façon convergente.

5. Un palier suivant l'une quelconque des revendications précédentes, caractérisé en ce que, sur le côté de la ou chaque bague poreuse (7) adjacent à la bague de roulement, est disposée une bague d'étanchéité (14).

6. Un palier suivant l'une quelconque des revendications précédentes, caractérisé en ce qu'une couche d'étanchéité, au moins pour le lubrifiant, est disposée sur le côté de la ou de chaque bague poreuse (7) adjacent à la bague de roulement.

7. Un palier suivant l'une quelconque des revendications précédentes, caractérisé en ce que, sur le côté de la ou de chaque bague poreuse (7) qui est situé à l'opposé de la bague de roulement est disposée une bague d'étanchéité (15) partiellement enfermée dans la bague poreuse (7).

8. Un palier suivant l'une quelconque des revendications 1 à 5, caractérisé en ce que la bague ou chaque bague poreuse est pourvue, sur son côté situé à l'opposé de la bague de roulement, d'une couche protectrice la rendant étanche vis-à-vis des fuites de lubrifiant.

9. Un palier suivant l'une quelconque des revendications précédentes, caractérisé en ce que la ou chaque bague poreuse (7) est formée d'une matière frittée.

10. Un palier suivant la revendication 3, caractérisé en ce que la bague absorbante (9) comprend du feutre.

**Patentansprüche**

1. Lager für den Einsatz bei hohen Drehzahlen, bestehend aus einem stillstehenden Laufring (2) und einem drehbaren Laufring (4), zwischen denen Wälzkörper (5) innerhalb eines Käfigs (6) angeordnet sind, sowie einem Schmiersystem zur Versorgung der Laufbahnen (11, 13) des Lagers (1) mit Schmiermittel, wobei das Schmiersystem mindestens einen Ring (7) aus porösem Material aufweist, der am stillstehenden Laufring (2) befestigt und mit einer dem stillstehenden Laufring benachbarten Schmiermittelquelle verbunden ist, dadurch gekennzeichnet, daß er bzw. jeder poröse Ring (7) einen Teil (10) aufweist, der axial nach einwärts zum Lager, dem drehbaren Laufring (4) benachbart, gerichtet ist und ein freies Ende besitzt, das keine Berührung mit anderen Teilen des Lagers hat.

2. Lager nach Anspruch 1, dadurch gekennzeichnet, daß zwei poröse Ringe (7) an entgegengesetzten Seiten des stillstehenden Laufrings (2) befestigt sind und die axial nach einwärts gerichteten Teile (10) dieser Ringe (7) keine Berührung mit einem Lagerteil haben.

3. Lager nach Anspruch 1 oder 2, dadurch gekennzeichnet, daß die Schmiermittelquelle aus einem mit Schmiermittel getränkten Absorptionsmittelring (9) besteht, der in eine Ausnehmung (8) eingesetzt ist, welche in dem bzw. jedem porösen Ring (7) ausgebildet ist und an den stillstehenden Laufring (2) anschließt.

4. Lager nach Anspruch 1 oder 2, dadurch gekennzeichnet, daß der bzw. jeder einwärts gerichte Teil (10) sich konvergierend verjüngt.

5. Lager nach einem der vorhergehenden Ansprüche, dadurch gekennzeichnet, daß an einer dem Laufring benachbarten Seite des bzw. jeden porösen Rings (7) ein Dichtring (14) angeordnet ist.

6. Lager nach einem der vorhergehenden Ansprüche, dadurch gekennzeichnet, daß ein Dichtungsbelag zumindest für das Schmiermittel an der dem Laufring benachbarten Seite des bzw. jedes porösen Rings (7) vorgesehen ist.

7. Lager nach einem der vorhergehenden Ansprüche, dadurch gekennzeichnet, daß an der vom Laufring abgewandten Seite des bzw. jeden porösen Rings (7) ein Dichtring (15) angeordnet ist, der den porösen Ring (7) teilweise umschließt.

8. Lager nach einem der Ansprüche 1 bis 5, dadurch gekennzeichnet, daß die bzw. jeder poröse Ring an der vom Laufring abgewandten Seite mit einer ihn gegen Schmiermittelverlust abdichtenden Schutzschicht versehen ist.

9. Lager nach einem der vorhergehenden Ansprüche, dadurch gekennzeichnet, daß der bzw. jeder poröse Ring (7) aus Sinterwerkstoff besteht.

10. Lager nach Anspruch 3, dadurch gekennzeichnet, daß der Absorptionsmittelring (9) aus Filz besteht.